# DEMANDE DE BREVET EUROPEEN

(11) **EP 0 849 132 A1**
(43) Date de publication de la demande: **24.06.1998**
(21) Numéro de dépôt: 97402881.3
(22) Date de dépôt: 28.11.1997
(51) Int. Cl.: B60R 22/18

(54) **Ferrure de fixation d'une ceinture de sécurité au siège munie d'un rétracteur pyrotechnique**

(30) Priorité: 18.12.1996 FR 9615589
(71) Demandeur: ECIA - EQUIPEMENTS ET COMPOSANTS POUR L'INDUSTRIE AUTOMOBILE, F-25400 Audincourt (FR)
(72) Inventeur: Harry, Sylvain, 45290 Nogent Sur Vernisson (FR); Laporte, Pierre, 45290 Nogent Sur Vernisson (FR)
(74) Mandataire: de la Bigne, Guillaume Michel Marie

(57) **Abrégé**

Le siège (10) est accroché de façon amovible sur un plancher (22) de l'habitacle. Le siège (10) porte un actionneur pyrotechnique (36) commandé par des moyens (38) de détection de choc portés par la caisse du véhicule. Ces moyens (38) de détection de choc commandent l'actionneur pyrotechnique (36) par une chaîne (40) de moyens de commande intermédiaires comportant une partie amont (40A), portée par la caisse, et une partie aval (40B), portée par le siège. Les parties amont (40A) et aval (40B) de la chaîne sont séparées mécaniquement en l'absence de choc et coopèrent mécaniquement lors d'un choc. De préférence, les parties amont (40A) et aval (40B) de la chaîne peuvent coopérer entre elles au moyen d'organes percuteur (44) et percuté (46).

## Description

La présente invention concerne un agencement d'un siège amovible dans l'habitacle d'un véhicule automobile.

On connaît déjà dans l'état de la technique un agencement d'un siège dans l'habitacle d'un véhicule automobile, du type dans lequel le siège est accroché de façon amovible sur une partie de la caisse du véhicule formant un plancher de l'habitacle.

Un tel agencement est décrit par exemple dans FR-A-2 699 973 (FR-A-92 15 857).

L'invention a pour but d'équiper un siège amovible d'un actionneur pyrotechnique, formant notamment un prétensionneur pour une ceinture de sécurité de ce siège, ceci sans que les manoeuvres d'accrochage et de décrochage du siège ne nuisent à la fiabilité de l'actionneur pyrotechnique et de ses moyens de commande.

A cet effet, l'invention a pour objet un agencement d'un siège dans l'habitacle d'un véhicule automobile, du type précité, caractérisé en ce que le siège porte un actionneur pyrotechnique commandé par des moyens de détection de choc portés par la caisse du véhicule, ces moyens de détection de choc commandant l'actionneur pyrotechnique par une chaîne de moyens de commande intermédiaires comportant une partie amont, portée par la caisse, et une partie aval, portée par le siège, les parties amont et aval de la chaîne étant séparées mécaniquement l'une de l'autre en l'absence de choc et coopérant l'une avec l'autre lors d'un choc.

Suivant des caractéristiques de différents modes de réalisation de l'invention :
- la partie amont de la chaîne comporte un organe percuteur destiné, en cas de choc, à frapper un organe percuté de-la partie aval de la chaîne ;
- l'organe percuté est un cristal piézoélectrique relié électriquement à l'actionneur pyrotechnique;
- l'organe percuté est une cartouche pyrotechnique aval reliée à l'actionneur pyrotechnique par une charge de poudre ;
- la partie amont de la chaîne comporte une cartouche pyrotechnique amont reliée, d'une part, électriquement, vers l'amont de la chaîne, aux moyens de détection de choc, et d'autre part, mécaniquement, vers l'aval de la chaîne, à l'organe percuteur ;
- l'agencement comporte de plus des moyens de protection de l'organe percuté déplaçables entre des positions de dégagement et de masquage de cet organe percuté.
- les moyens de protection sont commandés par des moyens d'accrochage d'un piétement du siège sur le plancher du véhicule, de manière à placer les moyens de protection, d'une part, en position de dégagement, lorsque le piétement est accroché sur le plancher, et d'autre part, en position de masquage, lorsque le piétement est séparé du plancher ;
- le siège est équipé d'une ceinture de sécurité comprenant un organe de verrouillage mâle relié à la ceinture, destiné à coopérer avec un organe de verrouillage femelle relié au siège, formant point d'ancrage de la ceinture, et les moyens de protection sont commandés par des moyens de détection de l'accrochage de l'organe de verrouillage mâle dans l'organe de verrouillage femelle, de manière à placer les moyens de protection, d'une part, en position de dégagement, lorsque les organes de verrouillage sont accrochés l'un dans l'autre, et d'autre part, en position de masquage, lorsque les organes de verrouillage sont séparés l'un de l'autre ;
- le siège est équipé d'une ceinture de sécurité comprenant un enrouleur de ceinture formant point d'ancrage de cette ceinture, et les moyens de protection sont commandés par des moyens de détection de la longueur du tronçon de ceinture enroulé sur l'enrouleur, de manière à placer les moyens de protection, d'une part, en position de dégagement, lorsque la ceinture est utilisée par un occupant du siège, et d'autre part, en position de masquage, lorsque la ceinture n'est pas utilisée ;
- le siège est équipé d'une ceinture de sécurité comprenant un organe de verrouillage mâle relié à la ceinture, destiné à coopérer avec un organe de verrouillage femelle relié au siège, formant point d'ancrage de la ceinture, l'actionneur pyrotechnique étant relié à l'organe de verrouillage femelle et formant un prétensionneur de la ceinture

L'invention sera mieux comprise à la lecture de la description qui va suivre donnée uniquement à titre d'exemple et faite en se référant aux dessins dans lesquels:
- la figure 1 est une vue en élévation schématique d'un siège agencé, selon un premier mode de réalisation de l'invention, dans l'habitacle d'un véhicule automobile;
- la figure 2 est une vue de détail, à échelle agrandie, de la partie cerclée 2 de la figure 1;
- les figures 3 et 4 sont des vues en plan de points d'ancrage de la ceinture de sécurité équipant le siège représenté sur la figure 1 ;
- les figures 5 et 6 sont des vues similaires à celles des figures 3 et 4, représentant respectivement deux variantes de réalisation des moyens de commande des moyens de protection de l'organe percuté représentés sur les figures 1 et 2;
- la figure 7 est une vue similaire à la figure 1 d'un siège agencé, selon un second mode de réalisation de l'invention, dans l'habitacle d'un véhicule automobile.

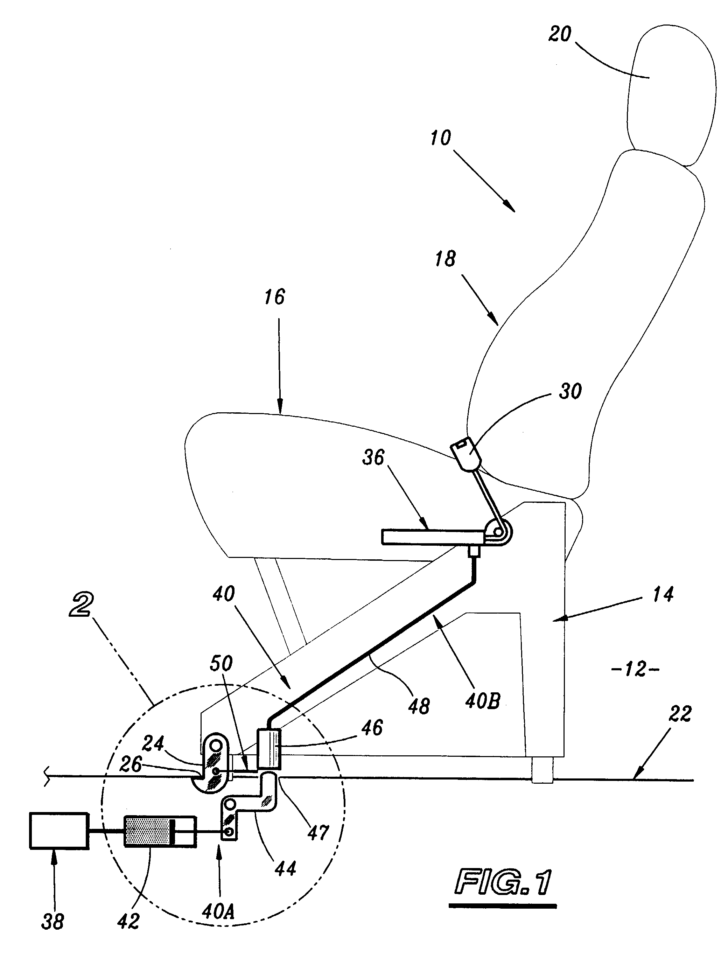

On a représenté sur la figure 1 un siège 10 agencé, selon un premier mode de réalisation de l'invention, dans un habitacle 12 de véhicule automobile.

De façon classique, le siège comprend un piétement 14, une assise 16 et un dossier 18 surmonté d'un appui-tête 20.

Le piétement 14 est accroché de façon amovible sur une partie de la caisse du véhicule formant un plancher 22 de l'habitacle.

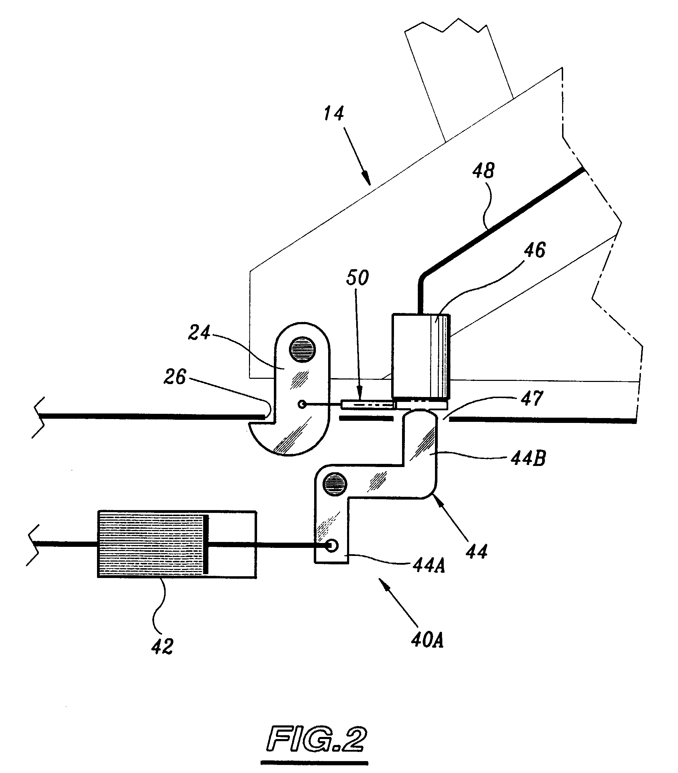

Le piétement 14 comporte, par exemple, une paire de pênes 24, formant crochets, dont un seul est représenté sur les figures 1 et 2, accrochés de façon amovible dans des gâches correspondantes 26 ménagées dans le plancher 22.

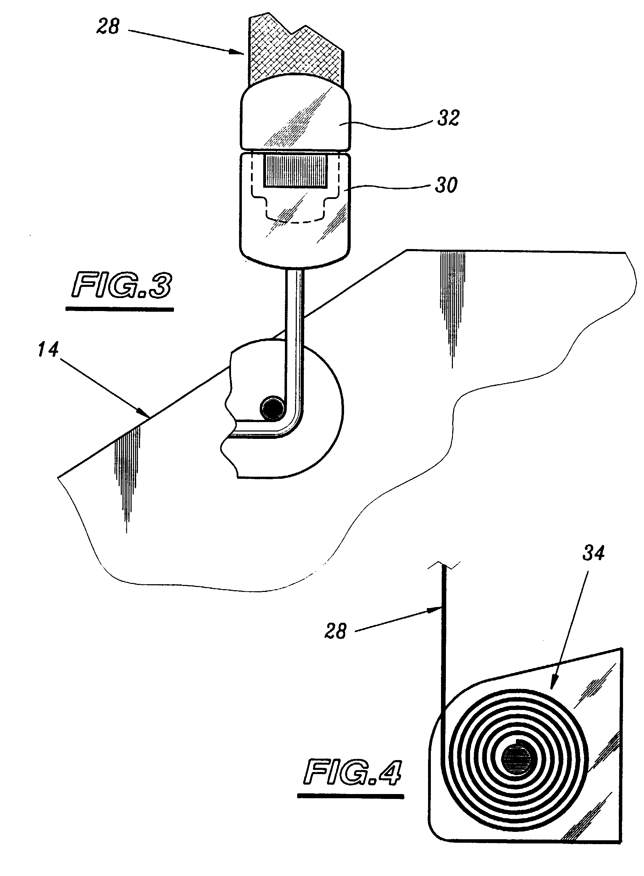

Le siège 10 comprend également une ceinture de sécurité 28 embarquée, représentée partiellement sur les figures 3 et 4. Cette ceinture 28 est munie de trois points d'ancrage portés par le siège, à savoir deux points d'ancrage inférieurs et un point d'ancrage supérieur.

Un premier point d'ancrage inférieur de la ceinture est matérialisé par un organe de verrouillage femelle 30, appelé généralement boucle, relié au piétement 14 (voir figures 1 et 3). Cet organe de verrouillage femelle 30 est destiné à coopérer, pour l'accrochage de la ceinture 28, avec un organe de verrouillage mâle 32 relié à la ceinture 28 (voir figure 3).

La ceinture 28 s'étend depuis un enrouleur 34, représenté sur la figure 4, jusqu'à un renvoi supérieur (non représenté).

L'enrouleur 34 et le renvoi de ceinture sont portés par le siège 10 et matérialisent le point d'ancrage supérieur de la ceinture. On notera que le second point d'ancrage inférieur de la ceinture n'est pas représenté sur les figures.

En variante, l'enrouleur 34, le renvoi de ceinture et le second point d'ancrage inférieur peuvent être séparés du siège 10 et portés par la caisse du véhicule.

Le siège 10 comporte également un actionneur pyrotechnique classique qui, dans l'exemple illustré, forme un prétensionneur 36 de la ceinture 28 activé en cas de choc.

Le prétensionneur 36 est relié de façon connue en soi à l'organe de verrouillage femelle 30.

Le prétensionneur 36 est commandé par des moyens classiques 38 de détection de choc, portés par la caisse du véhicule, représentés schématiquement sur la figure 1.

Les moyens de détection de choc 38 commandent le prétensionneur 36 par l'intermédiaire d'une chaîne 40 de moyens de commande intermédiaires.

La chaîne 40 comporte une partie amont 40A, portée par la caisse du véhicule, et une partie aval 40B, portée par le piétement 14.

La partie amont 40A de la chaîne est agencée, de préférence, sous le plancher 22.

La partie amont 40A de la chaîne comporte une cartouche pyrotechnique amont 42, de type classique, reliée, d'une part, électriquement (vers l'amont de la chaîne 40) aux moyens de détection de choc 38, et d'autre part, mécaniquement (vers l'aval de la chaîne 40) à un organe percuteur 44.

Cet organe percuteur 44 a une forme générale de levier de renvoi articulé sur la caisse du véhicule, muni d'une branche 44A de liaison avec la cartouche pyrotechnique amont 42 et d'une branche 44B de percussion.

La partie aval 40B de la chaîne comporte un organe percuté 46 destiné, en cas de choc, à être frappé par l'organe percuteur 44. A cet effet, le plancher 22 comporte un orifice 47 de passage de la branche de percussion 44B.

Dans le premier mode de réalisation de l'invention, l'organe percuté 46 est un cristal piézoélectrique relié électriquement, par des moyens à câbles 48, au prétensionneur 36.

Les organes percuteur 44 et percuté 46 permettent, d'une part, de séparer mécaniquement les parties amont 40A et aval 40B de la chaîne en l'absence de choc, et d'autre part, de faire coopérer mécaniquement ces deux parties 40A,40B lors d'un choc.

De préférence, il est prévu des moyens de protection de l'organe percuté 46 comportant, par exemple, un volet 50 tel que représenté sur les figures 1 et 2.

Ce volet 50 est déplaçable entre une position de dégagement de l'organe percuté 46, comme cela est représenté en traits forts sur la figure 2, et une position de masquage de l'organe percuté 46, comme cela est représenté en traits mixtes sur la figure 2.

Le volet de protection 50 est commandé, par exemple, par au moins un des crochets 24, de manière à placer le volet 50, d'une part, en position de dégagement, lorsque le crochet 24 est accroché dans la gâche correspondante 26, et d'autre part, en position de masquage, lorsque le crochet 24 est séparé de cette gâche 26.

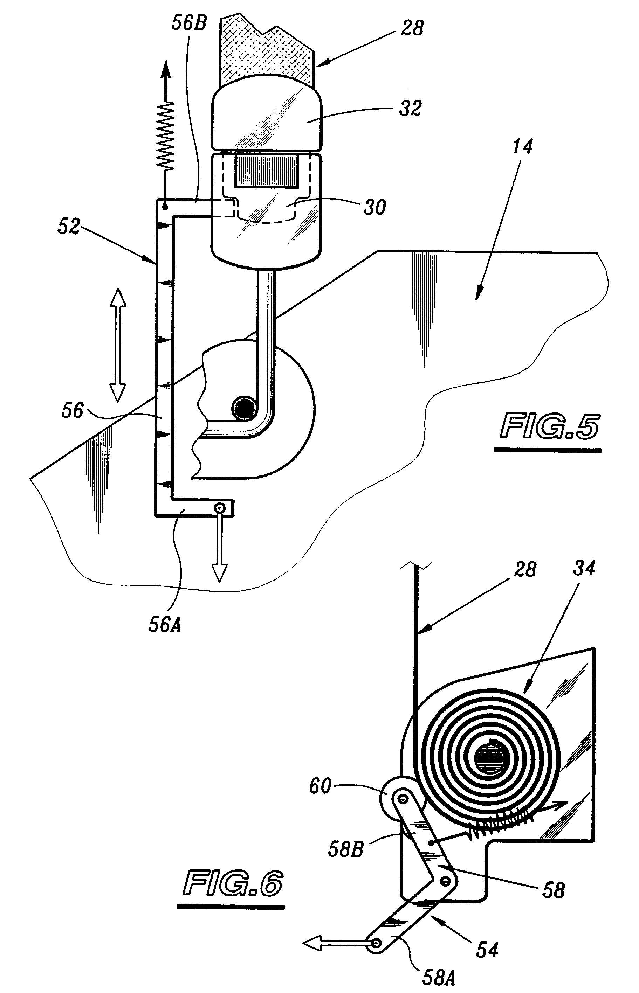

Selon deux variantes, le volet de protection 50 peut être commandé, soit par des moyens 52 de détection de l'accrochage des organes de verrouillage mâle 32 et femelle 30 de la ceinture 28, tels que représentés sur la figure 5, soit par des moyens 54 de détection de la longueur du tronçon de ceinture 28 enroulé sur l'enrouleur 34, tels que représentés sur la figure 6.

Ces deux variantes permettent de placer le volet de protection 50, d'une part, en position de dégagement de l'organe percuté 46, lorsque la ceinture de sécurité 28 est utilisée (un occupant est assis dans le siège 10), et d'autre part, dans une position de masquage de l'organe percuté 46, lorsque la ceinture de sécurité 28 n'est pas utilisée (ce qui est le cas lorsque le siège 10 est séparé du plancher 22).

Dans le cas de la première variante illustrée à la figure 5, les moyens de détection 52 comprennent, par exemple, une tringle 56 munie d'une première extrémité 56A reliée au volet de protection 50 et d'une seconde extrémité 56B destinée à être sollicitée en translation par l'organe de verrouillage mâle 32 lorsque ce dernier est accroché dans l'organe de verrouillage femelle 30.

La tringle 56 est rappelée élastiquement dans un sens tendant à placer le volet de protection 50 en position de masquage. Lorsque l'organe de verrouillage mâle 32 est accroché dans l'organe de verrouillage femelle 30, il sollicite la tringle 56 à l'encontre de sa force de rappel, de manière à placer le volet de protection 50 en position de dégagement.

Dans le cas de la seconde variante illustrée à la figure 6, les moyens de détection 54 comprennent, par exemple, un levier 58 articulé sur un support commun à ce levier et à l'enrouleur 34.

Le levier 58 comprend une première branche 58A reliée au volet de protection 50, et une seconde branche 58B munie d'un galet 60 de contact avec le tronçon de la ceinture 28 enroulé sur l'enrouleur 34. Le levier 58 oscille en fonction des variations du rayon du tronçon de ceinture enroulé.

Le levier 58 est rappelé élastiquement au contact du tronçon de ceinture enroulé et dans un sens tendant à placer le volet de protection 50 en position de dégagement. Lorsque la ceinture 28 n'est pas utilisée, un tronçon de longueur importante de la ceinture est enroulé dans l'enrouleur 34, si bien que le levier 58 est sollicité à l'encontre de sa force de rappel de manière à placer le volet de protection 50 en position de masquage.

Le siège 10 agencé selon l'invention est très simple à utiliser.

En effet, ce siège 10 peut être accroché sur le plancher 22 ou séparé de ce plancher 22 aussi aisément qu'un siège classique ne comportant pas de prétensionneur pyrotechnique, car les parties amont 40A et aval 40B de la chaîne de commande sont séparées mécaniquement.

Lorsque le siège 10 est séparé du plancher 22, le volet de protection 50 est en position de masquage et empêche ainsi toute percussion intempestive de l'organe percuté 46.

Lorsque le siège 10 est utilisé par un occupant ayant, si nécessaire, accroché la ceinture 28 (organes de verrouillage mâle 32 et femelle 30 accrochés l'un dans l'autre), le volet de protection 50 est dégagé de l'organe percuté 46.

En cas de choc, les moyens de détection 38 envoient une impulsion électrique à la cartouche pyrotechnique amont qui détonne et actionne l'organe percuteur 44. Ce dernier frappe l'organe 46 (cristal piézoélectrique) qui envoie une impulsion électrique de déclenchement du prétensionneur 36.

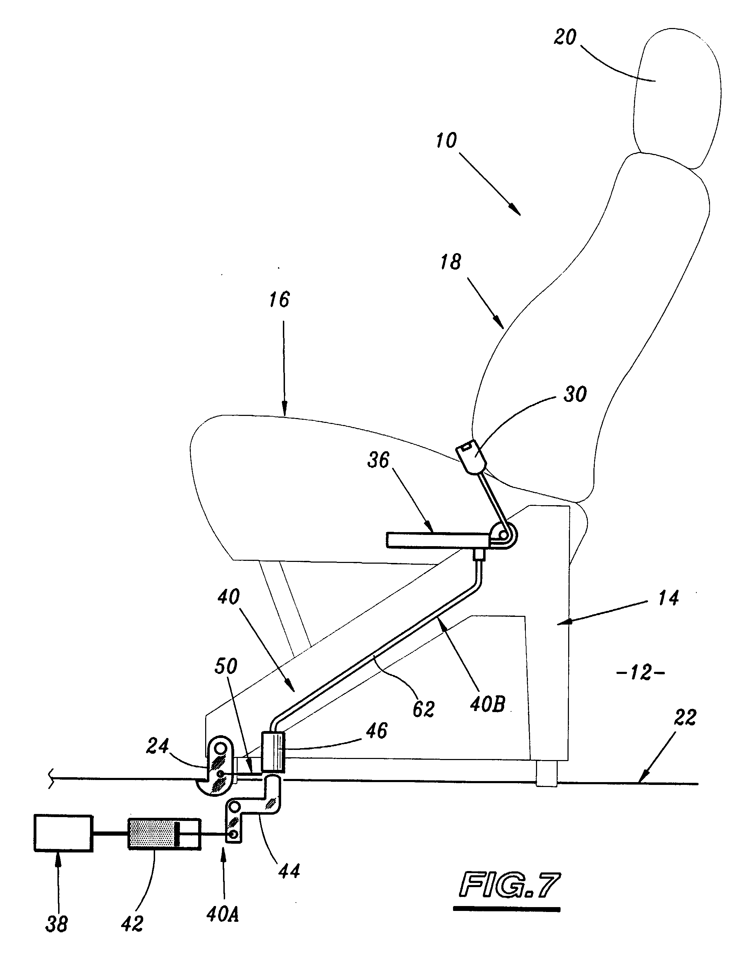

On a représenté sur la figure 7 un siège 10 agencé dans l'habitacle 12, selon un second mode de réalisation de l'invention.

Dans ce cas, l'organe percuté 46 est une cartouche pyrotechnique aval reliée au prétensionneur 36 par un conduit rempli d'une charge de poudre 62.

Le prétensionneur 36 est déclenché, lors d'un choc, par la détonation de la cartouche pyrotechnique aval 46 (frappée par l'organe percuteur 44) entraînant la détonation de la charge de poudre 62.

L'invention ne se limite pas aux modes de réalisation décrits ci-dessus.

En particulier, l'actionneur pyrotechnique peut être formé par un détonateur d'actionnement d'un générateur de gaz de module à sac gonflable.

## Revendications

1. Agencement d'un siège (10) dans l'habitacle (12) d'un véhicule automobile, du type dans lequel le siège (10) est accroché de façon amovible sur une partie de la caisse du véhicule formant un plancher (22) de l'habitacle, caractérisé en ce que le siège (10) porte un actionneur pyrotechnique (36) commandé par des moyens (38) de détection de choc portés par la caisse du véhicule, ces moyens (38) de détection de choc commandant l'actionneur pyrotechnique (36) par une chaîne (40) de moyens de commande intermédiaires comportant une partie amont (40A), portée par la caisse, et une partie aval (40B), portée par le siège, les parties amont (40A) et aval (40B) de la chaîne étant séparées mécaniquement l'une de l'autre en l'absence de choc et coopérant l'une avec l'autre lors d'un choc.

2. Agencement selon la revendication 1, caractérisé en ce que la partie amont (40A) de la chaîne comporte un organe percuteur (44) destiné, en cas de choc, à frapper un organe percuté (46) de la partie aval (40B) de la chaîne.

3. Agencement selon la revendication 2, caractérisé en ce que l'organe percuté (46) est un cristal piézoélectrique relié électriquement à l'actionneur pyrotechnique (36).

4. Agencement selon la revendication 2, caractérisé en ce que l'organe percuté (46) est une cartouche pyrotechnique aval reliée à l'actionneur pyrotechnique (36) par une charge de poudre (62).

5. Agencement selon l'une quelconque des revendications 2 à 4, caractérisé en ce que la partie amont (40A) de la chaîne comporte une cartouche pyrotechnique amont (42) reliée, d'une part, électriquement, vers l'amont de la chaîne (40), aux moyens (38) de détection de choc, et d'autre part, mécaniquement, vers l'aval de la chaîne (40), à l'organe percuteur (44).

6. Agencement selon l'une quelconque des revendications 2 à 5, caractérisé en ce qu'il comporte de plus des moyens (50) de protection de l'organe percuté (46) déplaçables entre des positions de dégagement et de masquage de cet organe percuté.

7. Agencement selon la revendication 6, caractérisé en ce que les moyens de protection (50) sont commandés par des moyens (24) d'accrochage d'un piétement (14) du siège sur le plancher (22) du véhicule, de manière à placer les moyens de protection (50), d'une part, en position de dégagement, lorsque le piétement (14) est accroché sur le plancher (22), et d'autre part, en position de masquage, lorsque le piétement (14) est séparé du plancher (22).

8. Agencement selon la revendication 6, caractérisé en ce que le siège (10) est équipé d'une ceinture de sécurité (28) comprenant un organe de verrouillage mâle (32) relié à la ceinture (28), destiné à coopérer avec un organe de verrouillage femelle (30) relié au siège (10), formant point d'ancrage de la ceinture (28), et en ce que les moyens de protection (50) sont commandés par des moyens (52) de détection de l'accrochage de l'organe de verrouillage mâle (32) dans l'organe de verrouillage femelle (30), de manière à placer les moyens de protection (50), d'une part, en position de dégagement, lorsque les organes de verrouillage (30,32) sont accrochés l'un dans l'autre, et d'autre part, en position de masquage, lorsque les organes de verrouillage (30,32) sont séparés l'un de l'autre.

9. Agencement selon la revendication 6, caractérisé en ce que le siège (10) est équipé d'une ceinture de sécurité (28) comprenant un enrouleur (34) de ceinture formant point d'ancrage de cette ceinture, et en ce que les moyens de protection (50) sont commandés par des moyens (54) de détection de la longueur du tronçon de ceinture enroulé sur l'enrouleur (34), de manière à placer les moyens de protection (50), d'une part, en position de dégagement, lorsque la ceinture (28) est utilisée par un occupant du siège, et d'autre part, en position de masquage, lorsque la ceinture (28) n'est pas utilisée.

10. Agencement selon l'une quelconque des revendications précédentes, caractérisé en ce que le siège (10) est équipé d'une ceinture de sécurité (28) comprenant un organe de verrouillage mâle (32) relié à la ceinture (28), destiné à coopérer avec un organe de verrouillage femelle (30) relié au siège, formant point d'ancrage de la ceinture (28), l'actionneur pyrotechnique (36) étant relié à l'organe de verrouillage femelle (30) et formant un prétensionneur de la ceinture (28).
